(19) **Europäisches Patentamt**

**European Patent Office**

**Office européen des brevets**

(11) Numéro de publication: **0 039 288**
**B1**

(12) **FASCICULE DE BREVET EUROPEEN**

(45) Date de publication du fascicule du brevet:
**03.10.84**

(51) Int. Cl.³: **G 21 C 5/08**

(21) Numéro de dépôt: **81400650.8**

(22) Date de dépôt: **24.04.81**

(54) **Dispositif de cloisonnement du coeur d'un réacteur nucléaire par des éléments amovibles.**

(30) Priorité: **25.04.80 FR 8009309**

(43) Date de publication de la demande:
**04.11.81 Bulletin 81/44**

(45) Mention de la délivrance du brevet:
**03.10.84 Bulletin 84/40**

(84) Etats contractants désignés:
**AT BE DE GB IT SE**

(56) Documents cités:
**DE - A - 2 104 645**
**DE - B - 2 818 886**
**FR - A - 1 424 060**
**FR - A - 2 134 250**
**FR - A - 2 163 729**
**GB - A - 1 115 492**
**US - A - 3 785 924**
**US - A - 4 199 403**

(73) Titulaire: **Framatome, Tour Fiat 1 place de la Coupole,**
**F-92400 Courbevoie (FR)**

(72) Inventeur: **Boiron, Pierre, 12, rue Pasteur,**
**F-92330 Sceaux (FR)**
Inventeur: **Poitrenaud, Pierre, 27, avenue du Plateau,**
**F-78190 Elancourt (FR)**

(74) Mandataire: **Bouget, Lucien et al,**
**CREUSOT-LOIRE 15 rue Pasquier, F-75383 Paris**
**Cedex 08 (FR)**

## Description

L'invention concerne un dispositif de cloisonnement du cœur d'un réacteur nucléaire par des éléments amovibles, le cœur du réacteur étant constitué par des assemblages prismatiques juxtaposés à l'intérieur d'une enveloppe limitant latéralement un espace entourant le cœur dans lequel circule un liquide de refroidissement.

Dans les réacteurs nucléaires, en particulier dans les réacteurs nucléaires à eau sous pression, le cœur du réacteur constitué par un ensemble d'assemblages de forme prismatique, généralement à section carrée et disposés verticalement, est parcouru par un liquide de refroidissement, généralement de l'eau, dans la direction longitudinale des assemblages pour le refroidissement de ceux-ci et le transfert de la chaleur du cœur vers les générateurs de vapeur.

Dans le cas des réacteurs à eau sous pression, les assemblages à section carrée sont disposés verticalement et l'eau de refroidissement sous pression circule elle-même dans la direction verticale en contact avec les assemblages combustibles constitués par un ensemble de tubes renfermant la matière fissile réunis sous forme d'un faisceau.

L'ensemble du cœur est disposé dans une jupe enveloppe qui est généralement de forme cylindrique comme la cuve qui contient le cœur et ses équipements annexes baignant dans le liquide de refroidissement.

L'ensemble des assemblages constituant le cœur présente une section de forme irrégulière comportant des redans qui s'inscrit à l'intérieur de la section de la jupe enveloppe, si bien qu'il subsiste entre les assemblages périphériques et la jupe enveloppe, une zone annulaire qui est vide de combustible.

Pour conserver la géométrie initiale du cœur et empêcher le réfrigérant de circuler librement dans cette zone et le canaliser sur le cœur proprement dit, il est connu d'utiliser un ensemble de cloisonnement qui épouse exactement le contour du cœur. La fixation de cet ensemble de cloisonnement pose des problèmes de réalisation pratique liés au fait que les exigences en ce qui concerne la précision dimensionnelle de cet ensemble sont très sévères et que les conditions règnant dans la cuve du réacteur en service (pression, température et rayonnements) nécessitent la prise en compte de possibilités diverses de déformation de la structure en service.

Les dispositifs de cloisonnement des réacteurs de l'art antérieur sont généralement réalisés sous forme monobloc et constitués par des plaques de cloisonnement longitudinales fixées à des plaques de renfort transversales appelées conformateurs, elles-mêmes fixées à l'enveloppe cylindrique du cœur. De telles structures monobloc sont difficiles à réaliser et leur mise en place et leur fixation à l'intérieur de la jupe cylindrique enveloppant le cœur est également une opération délicate. Il faut en effet que l'ensemble constitué par la jupe enveloppe et le dispositif de cloisonnement ménage un espace parfaitement défini pour les assemblages constituant le cœur du réacteur et supporte des déformations en service à l'intérieur de la cuve du réacteur.

De plus, les dispositifs de fixation des éléments constituant cette structure complexe, qu'ils soient constitués par des vis ou par des tenons associés à des soudures sont extrêmement sensibles aux contraintes mécaniques et aux flux neutroniques que la structure est amenée à subir à l'intérieur de la cuve du réacteur lorsque celui-ci est en service.

Dans le FR-A-2 134 250, est décrit un dispositif de cloisonnement du cœur d'un réacteur nucléaire constitué par un ensemble de plaques verticales assemblées à angle droit et une pluralité de plaques horizontales assemblées rigidement aux plaques verticales. Le cloisonnement est mis en place dans la cuve du réacteur sous la forme d'un ensemble unique dont les dimensions transversales sont inférieures au diamètre de l'enveloppe de cœur. Le cloisonnement repose sur la grille inférieure de support du cœur et s'appuie sur l'enveloppe de cœur par l'intermédiaire de garnitures flexibles rapportées. La fixation du cloisonnement est assurée par soudage de la plaque horizontale supérieure sur l'enveloppe de cœur. Un tel cloisonnement qui n'est pas fixé sur l'enveloppe de cœur par des vis ou des tenons soudés n'est cependant pas réellement démontable et amovible, puisque sa plaque horizontale supérieure est soudée sur l'enveloppe de cœur et qu'il forme un ensemble monobloc qu'il est difficile de sortir de la cuve.

D'autre part, le cloisonnement ne peut pas se déformer librement dans la direction axiale, puisque sa partie inférieure repose sur la grille inférieure de cœur et que sa partie supérieure est fixée sur l'enveloppe de cœur.

Le but de l'invention est donc de proposer un dispositif de cloisonnement du cœur d'un réacteur nucléaire par des éléments amovibles, le cœur du réacteur étant constitué par des assemblages prismatiques juxtaposés à l'intérieur d'une enveloppe limitant latéralement un espace entourant le cœur dans lequel circule un liquide de refroidissement dans la direction longitudinale des assemblages, une plaque inférieure et une plaque supérieure de soutien étant d'autre part disposées de part et d'autre du cœur dans la direction longitudinale, comprenant un ensemble de boîtiers comportant chacun au moins deux plaques assemblées rigidement à angle droit et disposées dans la direction longitudinale des assemblages, et une pluralité de plaques transversales perpendiculaires aux plaques longitudinales et assemblées rigidement à ces plaques, ces boîtiers étant disposés côte à côte à l'intérieur de l'enveloppe du cœur et en appui souple sur celle-ci de façon que les faces des plaques longitudinales dirigées vers le cœur de réacteur servent de faces d'appui aux assemblages disposés à la périphérie du cœur, ce dispositif de cloisonnement étant d'une structure telle que sa construction et sa mise en place dans la jupe enveloppe du cœur soient facilitées et que ses déformations sous l'effet des conditions régnant dans la cuve du réacteur en service soient compatibles avec les fonctions du dispositif de cloisonnement et permettent d'éviter une détérioration des éléments de liaison de la structure.

Dans ce but, chacun de ces boîtiers est disposé dans l'enveloppe de cœur de façon amovible et fixé par l'une au moins de ses extrémités à l'une au moins des plaques supérieure ou inférieure de soutien par une liaison souple autorisant des déplacements longitudinaux du boîtier.

Afin de bien faire comprendre l'invention, on va maintenant décrire à titre d'exemple non limitatif en se référant aux figures jointes en annexe plusieurs modes de réalisation du dispositif de cloisonnement suivant l'invention, appliqués au cas d'un réacteur nucléaire à eau sous pression.

La fig. 1 représente dans une vue en coupe par un plan vertical une partie du dispositif de cloisonnement en position à l'intérieur de la jupe enveloppe du cœur du réacteur.

La fig. 2 représente une vue suivant A–A de la fig. 1.

La fig. 3 représente le détail noté 3 sur la fig. 2 à une échelle agrandie.

La fig. 4 représente le détail noté 4 sur la fig. 2 à une échelle agrandie.

La fig. 5 représente dans une vue en coupe par un plan vertical, un second mode de réalisation d'un boîtier du dispositif de cloisonnement.

La fig. 6 représente dans une vue en coupe par un plan vertical un boîtier du dispositif de cloisonnement suivant l'invention comportant des éléments de protection et des éléments de mesure.

La fig. 7 représente une coupe suivant B–B de la fig. 6.

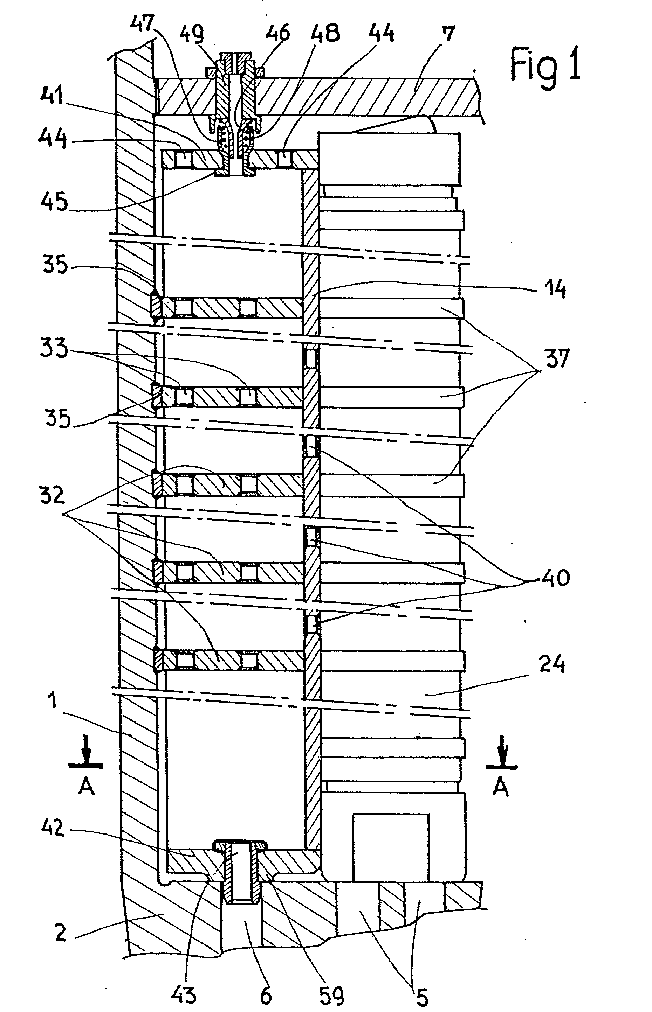

Sur la fig. 1, on voit une partie de la jupe enveloppe cylindrique 1 du cœur dont l'axe est vertical, en position dans la cuve du réacteur.

Cette jupe enveloppe 1 est solidaire d'une plaque de base 2 sur laquelle reposent les assemblages combustibles 24 constituant le cœur du réacteur.

La plaque de base 2 est percée de trous 5 pour le passage de l'eau de refroidissement à travers le cœur du réacteur et de trous 6 pour la mise en place du dispositif de cloisonnement.

Le dispositif comporte également une plaque supérieure 7 permettant la fixation du dispositif de cloisonnement.

Les assemblages 24 sont maintenus en position fixe entre les plaques 2 et 7 qui limitent le cœur à sa partie supérieure et à sa partie inférieure.

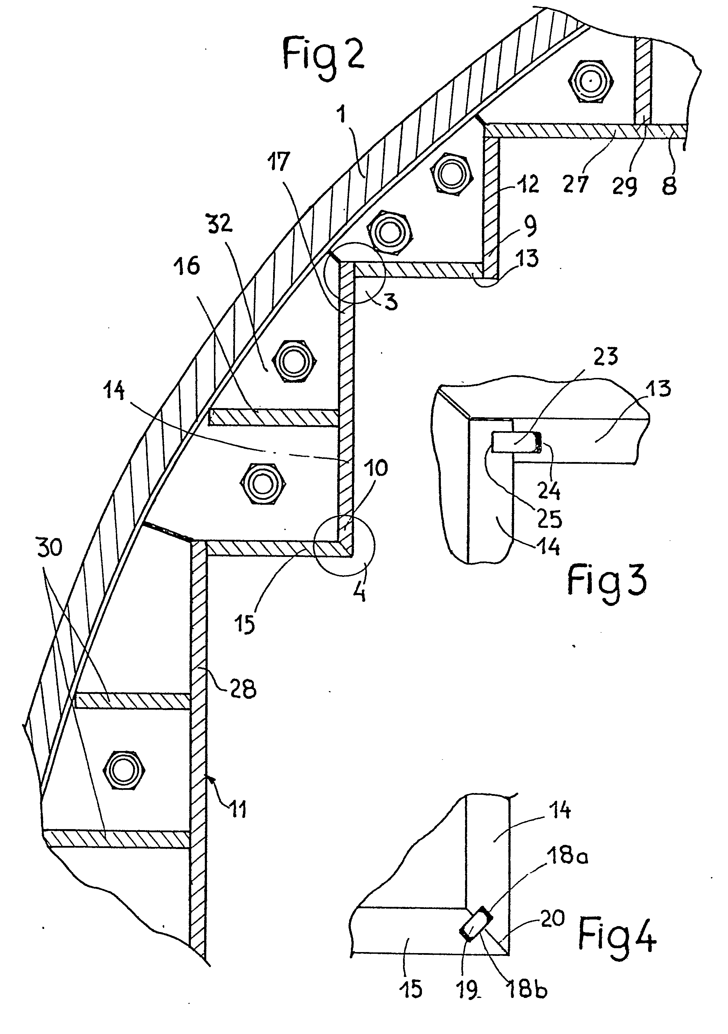

Sur la fig. 2, on a représenté une partie du dispositif de cloisonnement comportant des boîtiers 8, 9, 10 et 11 juxtaposés les uns par rapport aux autres à la périphérie de la jupe enveloppe 1, de façon à ménager à la partie centrale de cette enveloppe l'emplacement du cœur du réacteur constitué par les assemblages 24.

Le boîtier 9 est constitué par deux plaques 12 et 13 verticales, c'est-à-dire disposées dans la direction longitudinale des assemblages.

Le boîtier 10 dont une vue en coupe par un plan vertical est représentée à la fig. 1 est constitué de deux plaques verticales 14 et 15, disposées à angle droit suivant l'assemblage dont le détail est représenté à la fig. 4 et par une plaque de renfort 16 perpendiculaire à la plaque 14 soudée à celle-ci, sur sa face externe 17 dirigée vers l'enveloppe 1.

Ainsi qu'il est visible sur la fig. 4, les deux plaques 14 et 15 comportent des rainures 18a et 18b respectivement usinées dans une direction perpendiculaire à leurs faces communes d'assemblage 20 faisant un angle de 45° avec les faces internes des plaques 14 et 15.

Une clavette 19 permet d'assembler les faces 14 et 15 constituant la paroi interne du boîtier 10.

Les boîtiers 9 et 10 peuvent de même être assemblés l'un avec l'autre par l'intermédiaire d'une clavette 23 introduite dans des rainures 24 et 25 ménagées dans les plaques verticales 13 et 14 respectivement, sur toute leur longueur.

Les boîtiers 8 et 11 sont constitués par des plaques 27 et 28 respectivement, de grande largeur, sur la face externe desquelles sont soudées des plaques verticales de raidissement 29 et 30 respectivement.

L'ensemble des faces internes des plaques verticales 12, 13, 14, 27 et 28 constitue les faces d'appui des assemblages combustibles 24 disposés à la périphérie du cœur.

On voit donc que les boîtiers peuvent être de plusieurs types mais qu'ils comportent dans tous les cas au moins deux plaques verticales assemblées rigidement et disposées perpendiculairement l'une par rapport à l'autre.

Sur la fig. 1 on voit le boîtier 10 dans une vue en coupe par un plan vertical.

Ce boîtier 10 est constitué non seulement de plaques verticales telles que 14 mais encore de plaques horizontales de renfort 32 percées de trous 33 pour le passage de l'eau de refroidissement. On voit sur la fig. 2 que ces plaques de renforcement 32 sont disposées dans les angles dièdres ménagés entre les plaques verticales et que leur contour extérieur comporte une portion de cercle pour leur mise en appui sur des pièces annulaires d'appui 35 fixées sur la paroi intérieure de la jupe enveloppe 1.

On voit sur la fig. 1 que les plaques horizontales 32 et les pièces d'appui annulaires 35 sont disposées au niveau des grilles entretoises 37 de l'assemblage 24.

Des orifices 40 sont prévus dans la plaque verticale 14 pour équilibrer la pression entre le cœur du réacteur et l'intérieur du boîtier 10.

Le boîtier 10 comporte également une plaque de renfort supérieure 41 et une plaque de renfort inférieure 42 qui sont maintenues par vis aux extrémités de la plaque verticale 14.

Sur la plaque de renfort inférieure 42 est fixé un pion de centrage creux 43 qui vient se placer lors de la mise en position du boîtier 10 dans un trou traversant 6 ménagé dans la plaque support inférieure 2. La plaque inférieure 42 repose sur la plaque de support 2 par l'intermédiaire d'un bossage 59.

La plaque renfort supérieure 41 comporte des orifices pour le passage de l'eau de refroidissement 44 et un orifice 45 permettant la fixation du boîtier par rapport à la plaque supérieure 7.

Le dispositif de fixation du boîtier sur la plaque supérieure de soutien 7 est constitué par un pion de centrage en deux parties 46 et 47 coulissant l'une à l'intérieur de l'autre avec interposition d'un ressort 48 porté par la plaque supérieure de renfort 41 du boîtier et par une pièce d'appui 49 solidaire de la plaque supérieure 7.

Lors de la mise en place de la plaque 7 au-dessus des boîtiers, les dispositifs 49 viennent en position sur les pions de centrage 46, 47, ce qui a pour effet de comprimer le ressort 48 qui permet la fixation en position du boîtier entre les deux plaques 2 et 7.

Chacun des boîtiers est ainsi maintenu en position sans que pour autant sa fixation interdise des dilatations du boîtier et des déplacements dans la direction longitudinale.

En effet, le boîtier n'est relié à la jupe enveloppe 1 par aucune fixation rigide, les boîtiers étant uniquement en appui par les plaques de renfort 32, sur les anneaux d'appui 35.

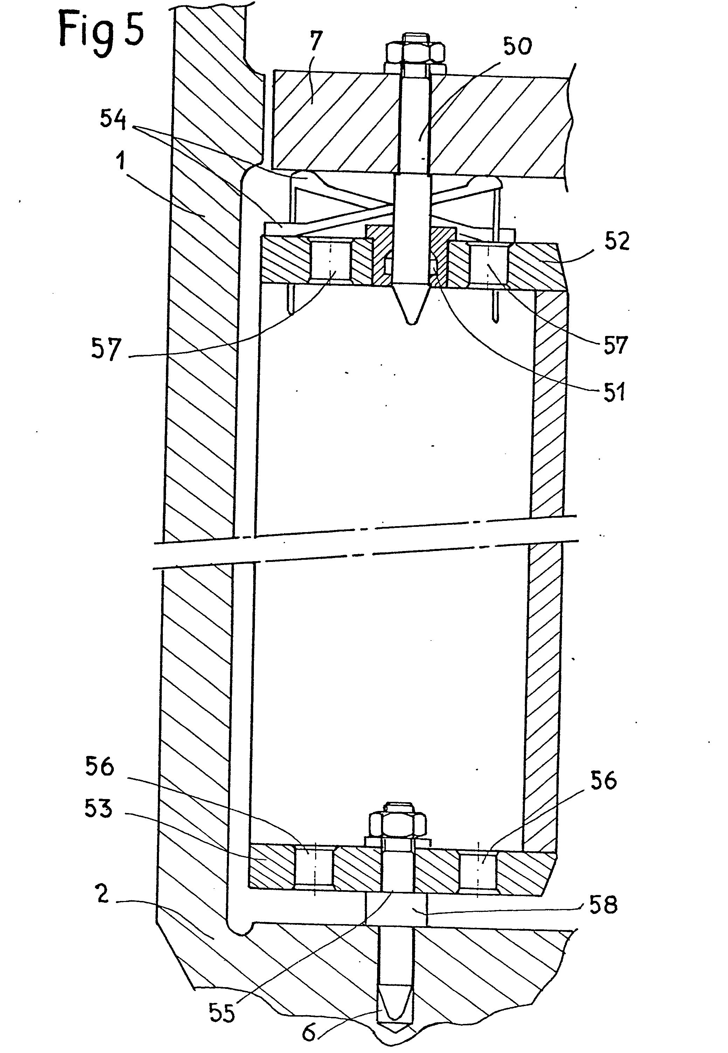

A la fig. 5 est représentée une variante du dispositif de fixation des boîtiers par rapport aux plaques 2 et 7.

Dans cette variante, un pion de centrage 50 solidaire de la plaque supérieure 7 vient s'engager dans une ouverture 51 ménagée dans la plaque de renfort supérieure 52 du boîtier.

Des ressorts à lames 54 solidaires de la plaque de renfort 52 du boîtier sont comprimés par la plaque 7 lors de la mise en place de cette plaque 7 au-dessus du cœur du réacteur.

Le boîtier est ainsi maintenu en place par la force de compression des ressorts, la plaque inférieure de renfort 53 du boîtier portant un pion de centrage 55 qui vient s'engager dans un trou borgne 6 de la plaque de support 2. Le pion de centrage 55 comporte une partie médiane épaisse 58 limitant la position du boîtier en hauteur.

L'ouverture 51 ménagée dans la plaque 52 a une forme profilée permettant l'introduction d'un outil de levage du boîtier pour en effectuer l'enlèvement ou la mise en place.

Des ouvertures 56 pour le passage de l'eau sont ménagées dans la plaque inférieure 53, cependant que des ouvertures 57 sont également ménagées dans la plaque supérieure 52.

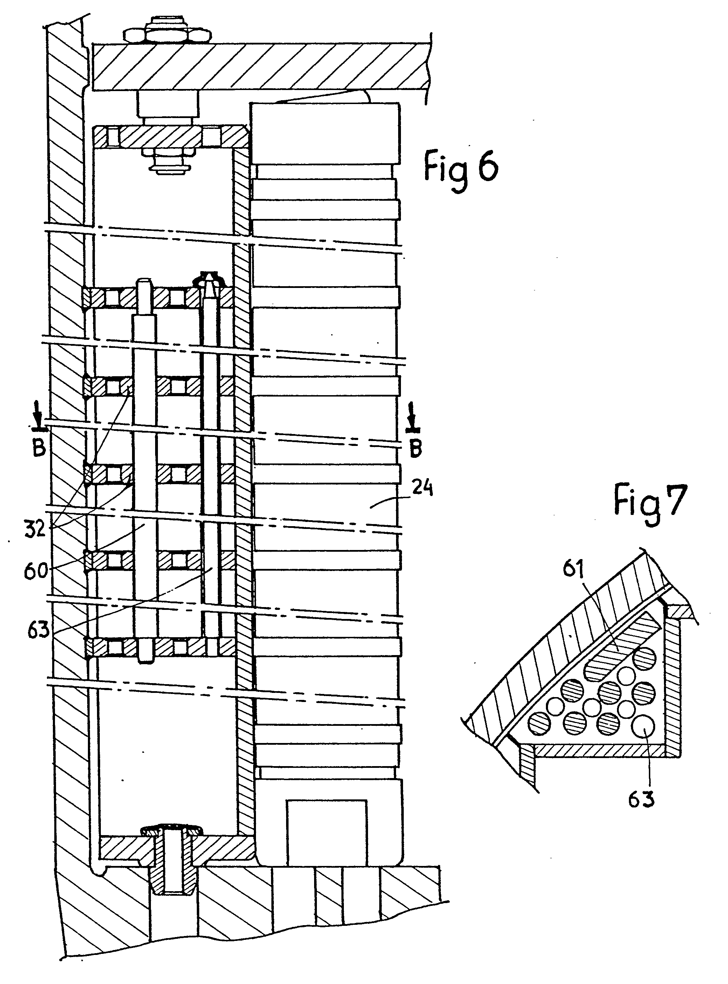

Sur les figs 6 et 7, on a représenté un boîtier tel que le boîtier 10 représenté à la fig. 1, dans lequel on a inséré des barreaux 60 et des plaques 61, dans des ouvertures prévues dans les plaques de renfort 32, dans le but d'absorber les neutrons et de limiter le rayonnement à l'extérieur de l'enveloppe du cœur et de la cuve du réacteur nucléaire, ou encore de produire des radio-éléments.

On a également représenté sur les figs 6 et 7 un dispositif 63 servant à la mesure de la puissance neutronique dégagée par le cœur à l'endroit considéré, à la mesure de la dose d'irradiation reçue à cet endroit et éventuellement pour l'injection de poison liquide ou le prélèvement de liquide de refroidissement au voisinage du cœur du réacteur.

Les boîtiers sont disposés autour du cœur du réacteur en nombre voulu et suivant une répartition déterminée pour ménager aux assemblages 24 un emplacement correspondant exactement à la section du cœur du réacteur.

Les boîtiers sont assemblés ainsi qu'il est visible sur la fig. 3 par des clavettes insérées dans des rainures pratiquées dans chacune des plaques verticales de contact entre les boîtiers, si bien que la fuite de liquide entre les plaques telles que 13 et 14 est fortement limitée par cet assemblage à clavettes et rainures.

Il apparaît que la mise en place des boîtiers à l'intérieur de la jupe enveloppe 1, elle-même disposée dans la cuve du réacteur peut être effectuée très simplement puisqu'il suffit d'amener chacun des boîtiers dans sa position à l'intérieur de la jupe enveloppe avec un outil de manutention engagé dans l'ouverture prévue sur la plaque de renfort supérieure du boîtier.

Le boîtier est alors mis en contact avec chacun des anneaux d'appui 35 de la jupe enveloppe 1 par l'intermédiaire de ses plaques de renfort horizontales 32.

Lorsque la mise en place de tous les boîtiers a été effectuée, on peut mettre en place les assemblages 24 pour la constitution du cœur, puis mettre en place la plaque supérieure de soutien 7. Lorsque cette plaque 7 est correctement orientée, les pions de centrage supérieurs viennent se mettre en position au niveau de chacun des boîtiers qui sont eux-mêmes centrés par rapport à la plaque de base 2 grâce aux pions de centrage solidaires des plaques inférieures de renfort, les boîtiers sont alors maintenus en position par compression des ressorts dont la force s'applique entre la plaque renfort supérieure du boîtier et la plaque de soutien 7.

On voit que les principaux avantages du dispositif suivant l'invention sont de permettre une construction simplifiée du dispositif de cloisonnement, par éléments séparés et amovibles, de faciliter la mise en place de ce dispositif de cloisonnement et de permettre des mouvements du cloisonnement sous l'effet des dilatations ou des contraintes d'origine mécanique ou dues au rayonnement.

Mais l'invention ne se limite pas aux modes de réalisation qui ont été décrits, elle en comporte au contraire toutes les variantes.

C'est ainsi qu'il est possible de fixer la position des boîtiers par rapport à l'enveloppe 1, non seulement grâce à des pions de centrage solidaires de la plaque de renfort inférieure du boîtier, mais également grâce à des clavettes engagées dans des rainures ménagées dans les plaques de renfort horizontales du boîtier et dans les anneaux d'appui de la jupe enveloppe, mises en concordance lors de la mise en place du boîtier.

Il est également possible de prévoir des dispositifs de liaison des plaques verticales des boîtiers, différents des dispositifs à rainures et clavettes qui ont été décrits.

Il est également possible de prévoir des modes de fixation des plaques verticales de raidissement de ces boîtiers différents de joints soudés.

On peut par exemple prévoir des modes de fixation par vis.

Il est possible d'imaginer des modes de liaison souples entre les boîtiers et les plaques de soutien supérieures ou inférieures différents des dispositifs à ressort qui ont été décrits. On pourrait par exemple imaginer des dispositifs de liaison du type pneumatique ou hydraulique. On a décrit des types de boîtiers comportant deux plaques verticales disposées à angle droit, deux plaques verticales disposées à angle droit et une plaque de renfort ou encore une plaque verticale de grande largeur associée à des plaques de renfort soudées sur l'une de ses faces. Il est bien évident qu'en fonction de la disposition du cœur, on pourra imaginer d'autres formes de boîtiers, ces boîtiers comportant de toute façon au moins deux plaques verticales disposées à angle droit.

Dans les dispositifs qui ont été décrits, les plaques de renfort horizontales étaient disposées de façon à se trouver à un niveau correspondant au niveau des grilles entretoises des assemblages combustibles, mais il est bien évident que l'on pourra disposer ces plaques de renfort horizontales suivant une répartition différente.

Enfin, le dispositif de cloisonnement qui a été décrit s'applique non seulement au cas des réacteurs nucléaires à eau sous pression mais au cas de tous les réacteurs nucléaires à eau et également à tout autre type de réacteurs comportant un cœur constitué par des assemblages prismatiques juxtaposés à l'intérieur d'une enveloppe limitant un espace entourant le cœur.

## Revendications

1. Dispositif de cloisonnement du cœur d'un réacteur nucléaire, le cœur du réacteur étant constitué par des assemblages prismatiques juxtaposés à l'intérieur d'une enveloppe du cœur limitant latéralement un espace entourant le cœur, dans lequel circule un liquide de refroidissement dans la direction longitudinale des assemblages, une plaque inférieure et une plaque supérieure de soutien étant d'autre part disposées de part et d'autre du cœur dans la direction longitudinale, comprenant un ensemble de boîtiers (8, 9, 10, 11) comportant chacun au moins deux plaques (12–13, 14–15, 27–29, 28–30) assemblées rigidement à angle droit et disposées dans la direction longitudinale des assemblages (24), et une pluralité de plaques transversales (32) perpendiculaires aux plaques longitudinales et assemblées rigidement à ces plaques, ces boîtiers (8, 9, 10, 11) étant disposés côte à côte à l'intérieur de l'enveloppe du cœur (1) et en appui souple sur celle-ci de façon que les faces des plaques longitudinales dirigées vers le cœur du réacteur servent de faces d'appui aux assemblages (24) disposés à la périphérie du cœur, caractérisé en ce que chacun de ces boîtiers (8, 9, 10, 11) est disposé dans l'enveloppe de cœur de façon amovible et fixé par l'une au moins de ses extrémités à l'une au moins des plaques supérieure ou inférieure de soutien (2, 7) par une liaison souple (46, 47, 48) autorisant les déplacements longitudinaux du boîtier.

2. Dispositif de cloisonnement suivant la revendication 1, caractérisé par le fait qu'une partie au moins des plaques longitudinales (14, 15) des boîtiers sont assemblées les unes aux autres par l'intermédiaire de clavettes (19) engagées dans des rainures (18a, 18b) ménagées dans ces plaques dans la direction longitudinale, sur toute la longueur des plaques (14, 15).

3. Dispositif de cloisonnement suivant l'une quelconque des revendications 1 et 2, caractérisé par le fait que le dispositif de liaison souple entre le boîtier (10) et l'une des plaques de soutien (7) est constitué par un pion de centrage en deux parties (46 et 47) coulissant l'une à l'intérieur de l'autre dans la direction longitudinale et entre lesquelles est disposé un ressort (48), fixé sur une plaque de renfort (41) disposée à l'extrémité du boîtier (10) venant à proximité de la plaque de soutien (7) correspondante lors de sa mise en place, la plaque de soutien (7) portant un dispositif d'appui (49) venant se centrer sur le pion (46, 47) lors de la mise en place de la plaque (7), provoquant la compression du ressort (48).

4. Dispositif de cloisonnement suivant l'une quelconque des revendications 1 et 2, caractérisé par le fait que le dispositif de liaison souple entre le boîtier (10) et l'une des plaques de soutien (7) est constitué par un pion de centrage (50) solidaire de la plaque de soutien (7), par des ressorts à lames (54) intercalés entre une plaque de renfort d'extrémité du boîtier (52) et la plaque de soutien (7) et par une ouverture (51) pratiquée dans cette plaque de renfort d'extrémité (52) pour l'engagement du pion de centrage (50) porté par la plaque de soutien (7).

5. Dispositif de cloisonnement suivant l'une quelconque des revendications 1 et 2, caractérisé par le fait que le boîtier (10) est associé à l'une de ses extrémités à un dispositif de liaison souple (46, 47, 48; 50, 54) et à son autre extrémité à un pion de centrage (43; 55) dans la plaque de soutien correspondante (2).

6. Dispositif de cloisonnement suivant l'une quelconque des revendications 1, 2, 3, 4 et 5, caractérisé par le fait qu'une partie au moins des boîtiers (8, 9, 10, 11) comporte une plaque longitudinale de grande largeur (27, 28) associée à plusieurs plaques de raidissement longitudinales (29, 30) disposées perpendiculairement à cette plaque longitudinale de grande largeur (27, 28) et fixées rigidement à cette plaque sur sa face externe, c'est-à-dire dirigées vers l'enveloppe du cœur (1).

7. Dispositif de cloisonnement suivant l'une quelconque des revendications 1, 2, 3, 4, 5 et 6, caractérisé par le fait que chacun des boîtiers (8, 9, 10, 11) est en appui sur l'enveloppe du cœur (1) par l'intermédiaire de plaques transversales 32 appelées plaques de renfort sur des anneaux d'appui (35) solidaires de la surface interne de l'enveloppe du cœur (1).

8. Dispositif de cloisonnement suivant la revendication 7, caractérisé par le fait que les boîtiers (8, 9, 10, 11) sont maintenus en position par rapport à l'enveloppe du cœur (1) par des clavettes introduites dans des rainures usinées en concordance dans les anneaux d'appui (35) et dans les plaques de renfort transversales (32) du boîtier.

9. Dispositif de cloisonnement suivant l'une quelconque des revendications 1 à 8, caractérisé par le fait que des dispositifs (60, 61) de protection absorbant les neutrons et/ou destinés à la production de radio-éléments sont introduits à l'intérieur des boîtiers (8, 9, 10, 11), fixés sur les plaques transversales de renfort (32) de ces boîtiers.

10. Dispositif de cloisonnement suivant l'une quelconque des revendications 1 à 9, caractérisé par le fait que des dispositifs (63) de mesure, de prélèvement ou d'injection de poison liquide sont introduits dans les boîtiers et portés par les plaques transversales de renfort (32) de ces boîtiers.

## Claims

1. Device for partitioning the core of a nuclear reactor, the reactor core consisting of prismatic assemblies placed side by side inside a core enclosure bounding laterally a space surrounding the core, in which a coolant liquid circulates in the lengthwise direction of the assemblies, a lower and a higher support plate being furthermore arranged on either side of the core in the lengthwise direction, comprising a set of casings (8, 9, 10, 11) each including at least two plates (12–13, 14–15, 27–29, 28–30) assembled rigidly at right angles and arranged in the lengthwise direction of the assemblies (24), and a plurality of transversal plates (32) perpendicular to the lengthwise plates and assembled rigidly to these plates, these casings (8, 9, 10, 11) being arranged side by side inside the core enclosure (1) and bearing flexibly on the latter so that the faces of the lengthwise plates directed towards the reactor core serve as bearing faces for the assemblies (24) arranged at the periphery of the core, characterised in that each of these casings (8, 9, 10, 11) is arranged in the core enclosure in a detachable manner and is fixed by at least one of its ends to at least one of the upper or lower support plates (2, 7) by a flexible coupling (46, 47, 48) permitting lengthwise movements of the casing.

2. Partitioning device according to Claim 1, characterised in that at least a part of the lengthwise plates (14, 15) of the casings are assembled together through the intermediacy of keys (19) engaged in grooves (18a, 18b) provided in the lengthwise direction in these plates, over the entire length of the plates (14, 15).

3. Partitioning device according to either of Claims 1 and 2, characterised in that the device for flexible coupling between the casing (10) and one of the support plates (7) consists of a centring stud in two parts (46 and 47) one sliding inside the other in the lengthwise direction and between which is arranged a spring (48) fixed on a reinforcing plate (41) arranged at the end of the casing (10) which comes close to the corresponding support plate (7) when installed, the support plate (7) carrying a bearing device (49) centring on the stud (46, 47) when the plate (7) is installed, causing compression of the spring (48).

4. Partitioning device according to either of Claims 1 and 2, characterised in that the device for flexible coupling between the casing (10) and one of the support plates (7) consists of a centring stud (50) fixed solidly to the support plate (7), of blade springs (54) inserted between a plate reinforcing the end of the casing (52) and the support plate (7) and of an opening (51) provided in this plate for reinforcing the end (52) to engage the centring stud (50) carried by the support plate (7).

5. Partitioning device according to either of Claims 1 and 2, characterised in that the casing (10) is associated at one of its ends with a device for flexible coupling (46, 47, 48; 50, 54) and at its other end with a stud for centring (43; 55) in the corresponding support plate (2).

6. Partitioning device according to any one of Claims 1, 2, 3, 4 and 5, characterised in that at least a part of the casings (8, 9, 10, 11) include a lengthwise plate of great width (27, 28) associated with several lengthwise stiffening plates (29, 30) arranged perpendicularly to this lengthwise plate of great width (27, 28) and fixed rigidly to this plate on its outer face, that is to say directed towards the core enclosure (1).

7. Partitioning device according to any one of Claims 1, 2, 3, 4, 5 and 6, characterised in that each of the casings (8, 9, 10, 11) is bearing on the core enclosure (1) through the intermediacy of transverse plates (32) called reinforcement plates on bearing rings (35) which are united with the inner surface of the core enclosure (1).

8. Partitioning device according to Claim 7, characterised in that the casings (8, 9, 10, 11) are held in position relative to the core enclosure (1) by keys entering in grooves machined in agreement with the bearing rings (35) and in the transverse reinforcement plates (32) of the casing.

9. Partitioning device according to any one of Claims 1 to 8, characterised in that the protective devices (60, 61) absorbing the neutrons and/or devices intended for the production of radio-elements are introduced inside the casings (8, 9, 10, 11) fixed on the transverse reinforcement plates (32) of these casings.

10. Partitioning device according to any one of Claims 1 to 9, characterised in that devices (63) for measuring, for withdrawal or for injection of liquid poison are introduced into the casings and carried by the transverse reinforcement plates (32) of these casings.

## Patentansprüche

1. Vorrichtung zur Abteilung des Kernes eines Atomreaktors, wobei der Reaktorkern aus prismatischen Einheiten besteht, die im Inneren einer Kernhülle nebeneinander angeordnet sind, welche seitlich einen den Kern umgebenden Raum abgrenzt, in welchem eine Kühlflüssigkeit in der Längsrichtung der Einheiten zirkuliert, wobei eine untere und eine obere Stützplatte zu beiden Seiten des Kerns in Längsrichtung angeordnet sind, welche Vorrichtung Gehäuseanordnungen (8, 9, 10, 11) umfasst, von denen jede zumindest zwei Platten (12–13, 14–15, 27–29, 28–30) aufweist, die fest bzw. starr in einem rechten Winkel zusammengebaut bzw. verbunden und in Längsrichtung der Einheiten (24) angeordnet sind, wobei eine Mehrzahl von querverlaufenden Platten (32) vorgesehen ist, die auf den längsverlaufenden Platten normal stehen und mit diesen Platten fest verbunden sind und wobei die Gehäuse (8, 9, 10, 11) im Inneren der Kernhülle nebeneinander angeordnet sind und auf dieser nachgiebig bzw. elastisch bzw. federnd gelagert sind, so dass die Flächen der längsverlaufenden Platten, die zum Reaktorkern gerichtet sind, als Stütz- bzw. Anlageflächen für die Einheiten (24), die an der Peripherie des Kerns gelegen sind, dienen, dadurch gekennzeichnet, dass jedes dieser Gehäuse (8, 9, 10, 11) in der Kernhülle austauschbar bzw. herausziehbar angeordnet ist und mit zumindest einem Ende an zumindest einer oberen oder unteren Stützplatte (2, 7) über eine nachgiebige bzw. elastische bzw. federnde Verbindung (46, 47, 48) befestigt ist, welche Längsverschiebungen des Gehäuses gestattet.

2. Vorrichtung zur Abteilung nach Anspruch 1, dadurch gekennzeichnet, dass zumindest ein Teil der längsverlaufenden Platten (14, 15) der Gehäuse mittels Keilen bzw. Nutkeilen aneinander befestigt sind, welche Keile in Fugen (18a, 18b) eingesetzt sind, welche in Längsrichtung dieser Platten über die gesamte Länge der Platten (14, 15) angebracht sind.

3. Vorrichtung zur Abteilung nach Anspruch 1 oder 2, dadurch gekennzeichnet, dass die nachgiebige bzw. elastische bzw. federnde Verbindungsvorrichtung zwischen dem Gehäuse (10) und einer der Stützplatten (7) aus einem Zentrierstein aus zwei Teilen (46 und 47) besteht, wobei ein Teil im Inneren des anderen Teiles in Längsrichtung gleitet und zwischen denen eine Feder (48) angeordnet ist, welche auf einer Verstärkungsplatte (41) befestigt ist, die sich am Ende des Gehäuses (10) befindet und die sich in der Nähe der entsprechenden Stützplatte (7) erstreckt, wenn sie in Stellung gebracht ist, wobei die Stützplatte (7) eine Abstützvorrichtung (49) trägt, welche sich bei dem Instellungbringen der Platte (7) auf dem Stein (46, 47) zentriert und das Zusammendrücken der Feder (48) bewirkt.

4. Vorrichtung zur Abteilung nach einem der Ansprüche 1 und 2, dadurch gekennzeichnet, dass die elastische bzw. nachgiebige bzw. federnde Verbindungsvorrichtung zwischen dem Gehäuse (10) und einer der Stützplatten (7) von einem Zentrierstein (50), der mit der Stützplatte (7) formschlüssig verbunden ist, von Blattfedern (54), welche zwischen einer Verstärkungsplatte des Gehäuseendes (52) und der Stützplatte (7) eingeschoben sind, und von einer Öffnung (51) gebildet ist, die in dieser Endverstärkungsplatte (52) zur Aufnahme bzw. zum Eingriff des Zentriersteines (50) ausgebildet ist, der von der Stützplatte (7) getragen ist.

5. Vorrichtung zur Abteilung nach einem der Ansprüche 1 und 2, dadurch gekennzeichnet, dass das Gehäuse (10) an einem seiner Enden mit einer nachgiebigen bzw. elastischen bzw. federnden Verbindungsvorrichtung (46, 47, 48; 50, 54) und an seinem anderen Ende mit einem Zentrierstein (43; 55) in der entsprechenden Stützplatte (2) verbunden ist.

6. Vorrichtung zur Abteilung nach einem der Ansprüche 1 bis 5, dadurch gekennzeichnet, dass zumindest ein Teil der Gehäuse (8, 9, 10, 11) eine längsverlaufende Platte (27, 28) von grosser Breite aufweist, welche mit mehreren längsverlaufenden Versteifungsplatten (29, 30) verbunden ist, die normal zu dieser längsverlaufenden Platte (27, 28) mit grosser Breite angeordnet sind und mit dieser auf ihrer äusseren Fläche fest verbunden sind, d.h. zur Kernhülle (1) gerichtet sind.

7. Vorrichtung zur Abteilung nach einem der Ansprüche 1 bis 6, dadurch gekennzeichnet, dass jedes der Gehäuse (8, 9, 10, 11) auf der Kernhülle (1) abgestützt ist mittels querverlaufender Platten (32), auch als Verstärkungsplatten auf Verstärkerringen (35) bezeichnet, welche mit der inneren Fläche der Kernhülle (1) formschlüssig verbunden sind.

8. Vorrichtung zur Abteilung nach Anspruch 7, dadurch gekennzeichnet, dass die Gehäuse (8, 9, 10, 11) in bezug auf die Kernhülle (1) durch Keile in Position gehalten sind, die in Nuten eingeführt sind, die übereinstimmend in den Stützringen (35) und in den querverlaufenden Verstärkungsplatten (32) des Gehäuses ausgeformt sind.

9. Vorrichtung zur Abteilung nach einem der Ansprüche 1 bis 8, dadurch gekennzeichnet, dass Schutzvorrichtungen (60, 61), welche die Neutronen absorbieren und/oder zur Herstellung von radioaktiven Elementen bestimmt sind, in das Innere von Gehäusen (8, 9, 10, 11) eingeführt sind, welche auf den querverlaufenden Verstärkungsplatten (32) dieser Gehäuse befestigt sind.

10. Vorrichtung zur Abteilung nach einem der Ansprüche 1 bis 9, dadurch gekennzeichnet, dass Vorrichtungen (63) zum Messen, zur Entnahme oder zum Einspritzen von flüssigem Gift in die Gehäuse eingeführt sind und von den querverlaufenden Verstärkungsplatten (32) dieser Gehäuse getragen sind.

Fig 1

0 039 288

Fig 2

Fig 3

Fig 4

11

Fig 5

Fig 6

Fig 7

24

32

60

63

61

63